Europäisches Patentamt

(19) European Patent Office

Office européen des brevets

(11) Publication number: **0 290 449 B1**

(12) **EUROPEAN PATENT SPECIFICATION**

(45) Date of publication of patent specification: **20.05.92**   (51) Int. Cl.⁵: **G03B  27/60**

(21) Application number: **87900818.3**

(22) Date of filing: **19.01.87**

(86) International application number:
**PCT/FI87/00008**

(87) International publication number:
**WO 87/04531 (30.07.87 87/17)**

(54) **A VACUUM-OPERATED HOLDER BOARD.**

(30) Priority: **21.01.86 FI 860263**

(43) Date of publication of application:
**17.11.88 Bulletin  88/46**

(45) Publication of the grant of the patent:
**20.05.92 Bulletin  92/21**

(84) Designated Contracting States:
**AT BE CH DE FR GB IT LI LU NL SE**

(56) References cited:
**DE-A- 3 220 009**
**DE-B- 1 146 742**
**DE-C- 2 950 080**
**US-A- 2 814 233**
**US-A- 3 064 524**

(73) Proprietor: **SAARILAHTI, Veikko Johannes**
**Piilolankuja 3 A 2**
**SF-40600 Jyväskylä(FI)**

(72) Inventor: **SAARILAHTI, Veikko Johannes**
**Piilolankuja 3 A 2**
**SF-40600 Jyväskylä(FI)**

(74) Representative: **Lauw, Rudolf C. W., Dipl.-Ing.,**
**Dipl.-Wirtschaftsing.**
**Karwinskistrasse 1**
**W-8000 München 60(DE)**

## Description

The present invention concerns a vacuum-operated holder board for securing light-sensitive sheet material to a process camera, or for a light-table, which consists of a perforated faceboard having a roughened and another surface and a baseboard and comprising extract channels, and between these boards, separate delimited suction areas, of which those that lie beneath the sheet material to be attached to the board are brought into operation by connecting them by means of said extract channels to a vacuum system.

In most process cameras the film casette is in a vertical position in a fixed place. In connexion with the film casette there is a separate projection surface for large pictures, and a matt focussing glass. All of these are generally hinged in order that each in turn can be turned into the line of the light image. How accurately the light-sensitive material, for example the film, and the matt focussing glass lie at the same distance from the lens, depends on teh accuracy of the precision engineering of the apparatus.

U.K. and U.S.A. patent publications numbers GB 1,453 953, and U.S. 3,308,714, 3,551,048, and 3,762,815 present holders that are characterized by mechanical solutions close to this invention. In the board in accordance with the U.K. publication three or more sheets, which are placed on top of one another, are used. Typically a fourth board must be used in addition to the first three, in order to achieve strength and straightness in the glass sheets. The use of the three glass sheet construction is difficult, because each one of the sheets must be machined. On the other hand oven a three-glass construction is not suitable as the base for a focussing surface i.e. matt glass. This use is ruled out by the three-sheet construction being too thick for the sharpness of the image to be able to be estimated with an eyeglass, for example to the degree of accuracy required in map photography. In the boards in accordance with the U.S.A. publications the film is secured to the surface of a perforated sheet, under which there are cell-like suction channels, which are formed between the faceboard and the baseboard. The vacuum between the boards may draw the faceboard and the film beneath it into a curve, especially in the holder present in the last publication. In the holder described in U.S.A. publications 3,308,714 and 3,551,048 there are dividing walls used between the boards, which divide the suction areas into parts, and form flow channels between the boards.

The field of the invention also includes a light-table apparatus. The production of an offset printing plate takes place as contact copying so that the transparent pictures, e.g. a positive film, secured to the folio, are pressed against the offset printing plate and lit through the folio. Layout work is commenced so that the folio, on top of which a little glue is spread to hold the film material onto it, is first placed onto the light-table. The spread glue hinders layout, which in addition must be carried out in mirror image, for the emulsion surface must be directly against the offset plate.

It is the object of the present invention to provide a holder board of the type described in the introductory portion of Claim 1, which is of simple construction, and which retains its level surface regardless of the vacuum between the boards.

This object will be solved by the subject-matter of Claim 1. Inventive and advantageous embodiments of the invention are claimed in the subclaims 2 to 5.

The form of realization in accordance with Patent Claim 1 makes it possible to form all the flow channels with the aid of the faceboard, in which case the baseboard can be completely flat, and does not require holes.

As applied to a process camera the holder board is best realized as in accordance with Patent Claims 3 and 4. As the basic structure the combination of glass-sheet - acrylic sheet is mechanically sturdy, and the distance of the sheets from one another being typically c. 0.01 mm the faceboard is scarcely permitted to bend. Due to the suction the distance dimimishes, and may disappear altogether. The roughened surface of the acrylic sheet acts to advantage as a projection surface at precisely the point where the light-sensitive material is lit, and in such a way that the focussed image is of the same dimensions as the lit image. The transparent baseboard makes it possible to also examine the image from the rear. A scale network and possible millimetre background make it easy to achieve a precise enlargement ratio. By examining the reflected image with the aid of a magnifying glass from the rear it is possible to correct an enlargement to an accuracy of a tenth of a millimetre at a distance of one metro. The holder board also acts advantageously simultaneously as a film casette, projection surface, and matt focussing glass.

When adapting the holder board to light-table use the form of realization in accordance with Patent Claim 5 is possible. According to it the holder board can be installed later as a light accessory to an existing light-table. A holder board in accordance with the invention is extremely advantageous in light-table use when positive or negative films are layed out for contact copying. When using a holder board in accordance with the invention the preparation of offset printing film layour takes place in the reverse order to that according to the technical level. The picture can be layed out on the holder board as such, because the suction retains it. As the emulsion surface remains against the board it is seen right way round, and only after layout is the glue spread on the pictures and the folio pressed against them, after which the vacuum is switched off, and the layed-out pictures attached to the folio are ready for contact copying onto an offset printing plate.

In what follows the invention is described with reference to the accompanying illustrations, which present one adaption of the invention intended to secure light-sensitive material to a projection surface for a process camera.

Figure 1.     Front view of the holder board;

Figure 2.     Cross-section, side view of the holder board;

Figure 3.     One form of the installation of the holder board in a process camera, and

Figure 4.     Partial cross-section of another form of installation.

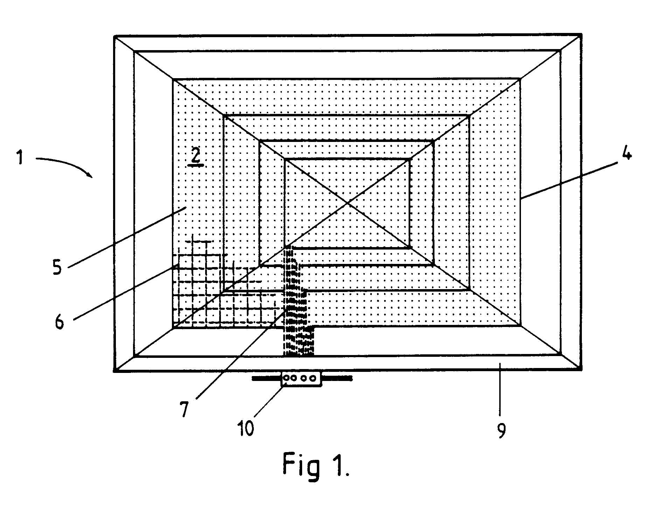

The holder board 1 is used for all sizes of sheets and films, and they are secured to the surface 8 by the effect of suction. The suction area is delimited and divided into different parts by means of the glue joint 4. Sealing strip, mastic, or tape can also be used for this purpose. The separate suction areas correspond to desired sizes, and they are brought into use with the aid of the valve device 10, which may be of the type described in the publication US 3,551,048. The holder board 1 also acts as a matt focussing glass in such a way that by means of the roughening of the surface 8 and the scale base, the reflected image is focussed using the same surface 8 to which the film or sheet is secured, Figure 1.

The structure of the holder board is thin. The acrylic sheet 2 and ground glass sheet 3 nearly touch one another. The suction channels are principally formed by the channels 6 cut in the acrylic sheet 2. The acrylic sheet 2 is perforated throughout, except for the area of the extract channels 7. The lack of perforation in a small area of the foot of the sheet has been found to have no practical significance.

The holes 5 channel the suction to the surface 8. Some of the holes 5 are over the channels 6, some between them. The space between sheets 2 and 3, which is even less than 0.01 mm, is nevertheless sufficient to direct the vacuum flow from hole 5 to channel 6. The suction finally draws sheets 2 and 3 tightly to each other locally, but before this the holes 5 between the channels 6 have been exhausted to form a vacuum.

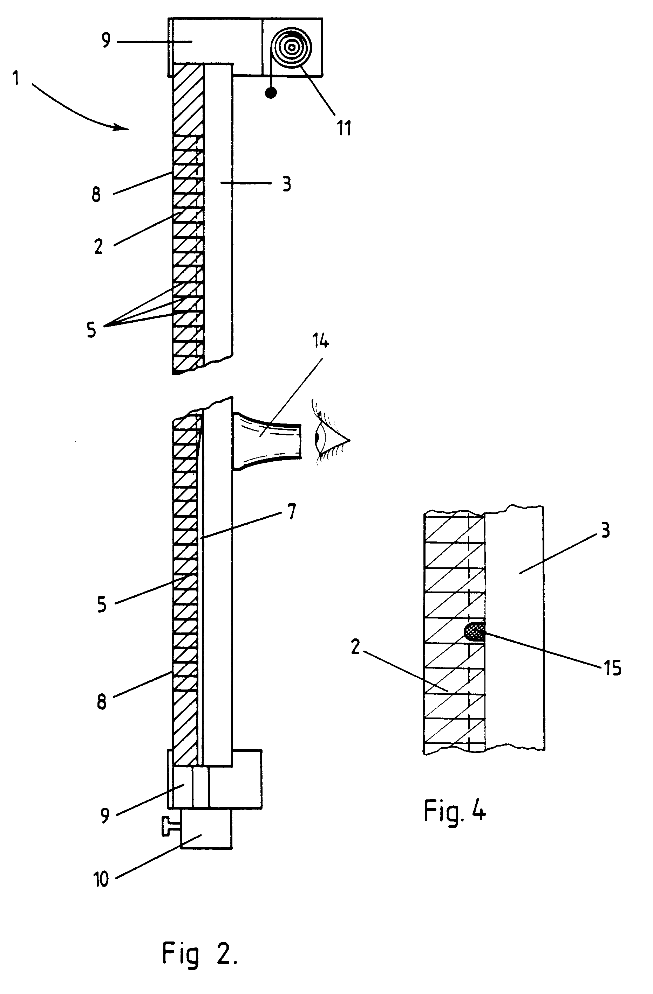

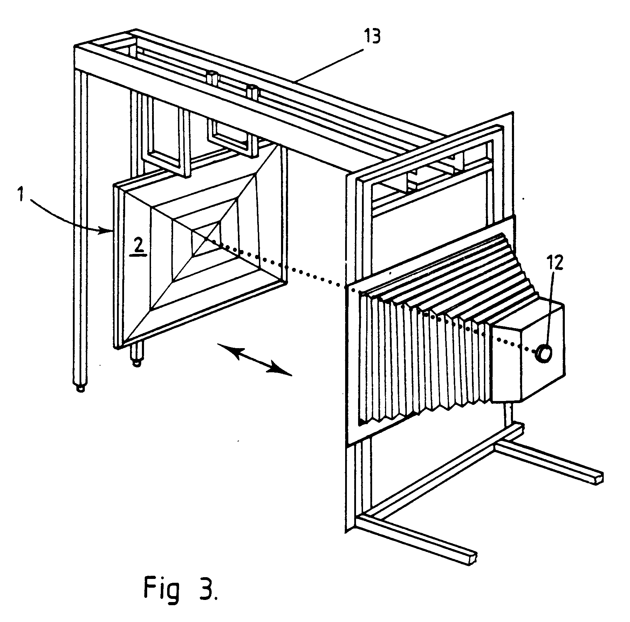

The holder board is constructed on a frame 9, Figure 2. In this the thickness of the sheets has been exaggerated. The thickness of the sheets is typically 5...10mm. The apparatus includes a vacuum pump as the source of suction. The roller blind 11 is required to avoid diffuse reflections during lighting. It is fundamental that the extract channels 7 and the suction flow collectors 6 are formed in the main from the channels made in the acrylic sheet, and only a small part of the suction flow travels through the narrow gap between sheets 2 and 3.

In addition in Figure 3 the holder board 1 is depicted as adapted in connexion with a process camera. The holder board 1 is in a darkroom to which the image is reflected through an opening in the wall, on the other side of which is a lens 12 with a bellows protected adjustment mechanism. The holder board 1 can be moved along the guides 13.

The production of a copy using the holder board 1 takes place as follows: the image is reflected onto surface 8 and focussed precisely and to the right size from the rear with the aid of the scale base on that side. When the safety lamp is lit the light-sensitive material, e.g. an A4 sheet, is placed in the correct position according to the scale base, the vacuum pump is started and only an A4-sized area is connected by means of the valve device 10. The picture is exposed and the vacuum pump stopped, when the exposed sheet is removed from the board and can be developed using normal procedures.

In Figure 4 another possible method of delimiting the suction areas is shown. Limit channels 15 are machined onto surface sheet 2, and these are filled with transparent silicon mastic. This is pressed completely into the grooves as sheets 2 and 3 are pulled onto one another as a result of the suction.

**Claims**

1.    A vacuum-operated holder board (1) for securing light-sensitive sheet material to a process camera, or for a light-table, which consists of a perforated faceboard (2) having a roughened (8) and another surface and a baseboard (3) and comprising extract channels (7), and between these boards (2,3), separate delimited suction areas, of which those that lie beneath the sheet material to be attached to the board are brought into operation by connecting them by means of said extract channels (7) to a vacuum system,

     **characterized in** that the suction areas are formed between the other surface of the faceboard (2) and the opposed surface of the baseboard (3) by delimiting them and separating them from one another by a glue joint (4), or by placing transparent or translucent sealing strips or mastic into grooves delimiting these areas, and that in order to improve the airflow the other surface of the faceboard (2) includes collector channels (6) formed of grooves interconnecting most of the holes (5) of the perforated faceboard (2), and that the extract channels (7) are formed of channels cut in the other surface of the faceboard (2).

2. A holder board (1) in accordance with Claim 1, in which the faceboard (2) is of acrylic or other plastic sheet material, **characterized in** that the perforation of the faceboard (2) is dense and covers the entire suction area except for the positions of the extract channels (7) and that the individual holes (5) are small, of a diameter of less than 1,0 mm.

3. A holder board (1) in accordance with Claims 1 or 2, which is intended to secure light-sensitive material to a process camera, **characterized in** that the baseboard (3) is a ground glass sheet.

4. A holder board (1) in accordance with Claims 1, 2 or 3, **characterized in** that the perforation of the faceboard (2) forms a centimetre or similar scale network, either alone or with a scale outline realized on the surface (8), e.g. a millimetre base.

5. A holder board (1) in accordance with Claims 1 or 2, which is intended as a light-table, comprising a plate of opal glass or similar, **characterized in** that the plate of said light-table is used as the baseboard (3).

**Revendications**

1. Plaque-support (1) avec aspiration pour la fixation de feuilles photosensibles sur une caméra de reproduction ou bien pour une table lumineuse de copiage, consistant en une plaque de face perforée (2) ayant une surface rugueuse (8) et une autre surface, et en une plaque de base (3), et comprenant des canaux d'extraction (7) et, entre ces plaques (2,3), des zones de succion séparées et délimitées dont celles qui se trouvent en-dessous des feuilles destinées à être attachées sur la plaque sont mises en opération en les reliant les unes aux autres au moyen desdits canaux d'extraction (7) pour former un système sous vide, **caractérisée en ce que** les zones de succion sont formées entre l'autre surface de la plaque de face (2) et la surface opposée de la plaque de base (3) en les délimitant et les séparant l'une de l'autre par un joint de colle (4), ou en disposant des bandes d'étanchement transparentes ou translucides ou bien du mastic dans des rainures délimitant ces zones, et que, en vue d'améliorer le flux de l'air, l'autre surface de la plaque de face (2) est munie de canaux collecteurs (6) formés de rainures reliant entre eux la plupart des trous (5) de la plaque de face perforée (2), et que les canaux d'extraction (7) consistent en des canaux taillés dans l'autre surface de la plaque de face (2).

2. Plaque-support (1) selon la revendication 1 dans laquelle la plaque de face (2) est d'un matériau acrylique ou en feuilles de matière plastique, **caractérisée en ce que** la perforation de la plaque de face (2) est dense et recouvre la totalité de la zone de succion sauf les emplacements des canaux d'extraction (7), et que les trous (5) sont petits, d'un diamètre de moins de 1,0 mm.

3. Plaque-support (1) selon la revendication 1 ou 2, destinée à fixer du matériel photosensible sur une caméra de reproduction, **caractérisée en ce que** la plaque de base (3) est une feuille de verre dépoli.

4. Plaque-support (1) selon la revendication 1, 2 ou 3, **caractérisée en ce que** les perforations de la plaque de face (2) forment un réseau d'une échelle d'un centimètre ou analogue, ou bien à elles seules, ou bien avec un profil réalisé sur la surface (8), p. ex. sur une base d'un millimètre.

5. Plaque-support (1) selon la revendication 1 ou 2, destinée à une table lumineuse comprenant une plaque de verre opaque ou similaire, **caractérisée en ce que** la plaque de ladite table lumineuse sert de plaque de base (3).

**Patentansprüche**

1. Mit Vakuum betriebene, zur Befestigung lichtempfindlicher Schichtmaterialien an einer Repro-Kamera oder für einen Lichttisch bestimmte Halteplatte (1), die aus einer perforierten Auflageplatte (2) mit einer aufgerauhten und einer anderen Fläche und einer Grundplatte bzw. Unterlegplatte (3) besteht und die Abzug- bzw. Saugkanäle (7) sowie zwischen diesen Platten (2,3) angeordnete, separat begrenzte Saugbereiche aufweist, von denen diejenigen, die unter dem an der Platte anzubringenden Flach- bzw. Schichtmaterial liegen, durch Anschluß an ein Vakuumsystem mittels der Saugkanäle (7) in Betrieb gesetzt werden, **dadurch gekennzeichnet,** daß die Saugbereiche zwischen der anderen Fläche der Auflageplatte (2) und der gegenüberliegenden Fläche der Grundplatte (3) dadurch gebildet werden, daß sie durch eine eine Klebeverbindung (4) oder durch Anbringen transparenter oder durchscheinender Dichtstreifen oder Mastix(-masse) in diese Bereiche begrenzende Nuten gegenseitig begrenzt und abgetrennt sind, und daß die andere Fläche der Auflageplatte (2) zur Verbesserung des Luftstroms Sammelkanäle (6) aufweist, die aus Nuten gebildet sind, die die meisten der Löcher (5) der perforierten Auflageplatte (2) miteinander verbinden, und daß die Abzug- bzw. Saugkanäle (7) aus in die andere Fläche der Auflageplatte (2) geschnittenen Kanälen gebildet sind.

2. Halteplatte (1) nach Anspruch 1, bei der die Auflageplatte (2) aus Acryl oder aus einem anderen Kunststoff-Flachmaterial besteht, **dadurch gekennzeichnet,** daß die Perforation der Auflageplatte (2) dicht ist und den ganzen Saugbereich bedeckt, mit Ausnahme der Bereiche für die Abzugkanäle (7), und daß die einzelnen Löcher (5) klein sind und einen Durchmesser von weniger als 1,0 mm aufweisen.

3. Halteplatte (1) nach Anspruch 1 oder 2, die zur Befestigung lichtempfindlichen Materials an einer Repro-Kamera bestimmt ist, **dadurch gekennzeichnet,** daß die Grundplatte (3) eine Grundglas- bzw. Schleifglasplatte ist.

4. Halteplatte (1) nach einem der Ansprüche 1, 2 oder 3, **dadurch gekennzeichnet,** daß die Perforation der Auflageplatte (2) ein Zentimeter- oder ähnliches Skalennetz bildet, entweder allein oder mit einer zusätzlichen Skala an der Außenlinie an der Fläche (8), beispielsweise eine Millimeterskala.

5. Halteplatte (1) nach Anspruch 1 oder 2, die als Lichttisch mit einer Platte aus Opalglas oder dergleichen bestimmt ist, **dadurch gekennzeichnet,** daß die Platte des Lichttisches als Grundplatte (3) verwendet wird.

Fig 1.

Fig 2.

Fig. 4

Fig 3.